(19)

Europäisches
Patentamt
European
Patent Office
Office européen
des brevets

(11) **EP 1 752 492 B1**

(12) **EUROPEAN PATENT SPECIFICATION**

(45) Date of publication and mention
of the grant of the patent:
**02.09.2009 Bulletin 2009/36**

(51) Int Cl.:
*C08L 23/04* *(2006.01)*    *B32B 27/32* *(2006.01)*

(21) Application number: **06117638.4**

(22) Date of filing: **21.07.2006**

(54) **Fuel-barrier thermoplastic resin compositions and articles**

Brennstoffundurchlässige thermoplastische Harzzusammensetzungen und Artikel

Compositions de résine thermoplastique imperméables au carburant et articles

(84) Designated Contracting States:
**DE FR GB IT**

(30) Priority: **08.08.2005 JP 2005229172**
**01.12.2005 JP 2005347581**

(43) Date of publication of application:
**14.02.2007 Bulletin 2007/07**

(73) Proprietor: **MITSUBISHI GAS CHEMICAL COMPANY, INC.**
**Chiyoda-ku,**
**Tokyo (JP)**

(72) Inventors:
• **Sato, Kazunobu**
  **Mitsubishi Gas Chemical Company,Inc**
  **Hiratsuka-shi,**
  **Kanagawa (JP)**

• **Kurokawa, Masashi**
  **Mitsubishi Gas Chem. Company,Inc**
  **Hiratsuka-shi,**
  **Kanagawa (JP)**

(74) Representative: **Gille Hrabal Struck Neidlein Prop Roos**
**Patentanwälte**
**Brucknerstrasse 20**
**40593 Düsseldorf (DE)**

(56) References cited:
**EP-A- 1 548 059         EP-A1- 1 350 806**
**EP-A1- 1 475 403**

**Description**

BACKGROUND OF THE INVENTION

1. Field of the Invention

The present invention relates to fuel-barrier thermoplastic resin compositions and articles, more particularly, relates to highly impact-resistant, fuel-barrier thermoplastic resin articles having a polyolefin-based layer with improved barrier properties, which is suitable, particularly, as containers, tubes and parts for storing fuels containing alcohol, and relates to thermoplastic resin compositions capable of producing such fuel-barrier thermoplastic resin articles.

2. Description of the Prior Art

In view of light weight, needlessness of anti-corrosive treatment, wide design liberty, reduction in the number of processing steps, and capability of full automatic production, resin containers formed by blow molding, etc. have come to attract attention as fuel storage containers and the replacement of metal fuel containers by resin fuel containers is now advancing.
However, since polyethylene (high density polyethylene) hitherto used for resin fuel containers is poor in fuel barrier properties despite its excellence in mechanical strength, moldability and economy, the fuel containers made of polyethylene cannot meet the recent regulations of fuel permeation from fuel container.
To solve this problem, many proposals have been made on the prevention of the fuel permeation, for example, by a fluorine treatment of the inner surface of containers or a blending of polyamide resin to polyethylene (JP 55-121017A, JP 5-156036A and JP 10-279752). However, the fluorine treatment is now scarcely used because the use of harmful gas requires safety precautions for its handling and troublesome recovery of the harmful gas after treatment. By blending a barrier resin into polyolefin so as to disperse throughout polyethylene in layers, the fuel permeation can be reduced to some extent. However, the fuel barrier properties are still unsatisfactory. Even if the fuel barrier properties are sufficient, other problems are caused, for example, the absorption ability of crash impact is reduced and the moldability becomes poor, thereby failing to fully meet the regulations which are getting increasingly stringent. The use of alcohols such as ethanol as a fuel has been progressively attempted because the consumption of fossil fuels can be reduced by adding alcohols into gasoline thereby to reduce the carbon dioxide emission. However, since known barrier resins such as nylon 6 and ethylene-vinyl alcohol copolymers show poor barrier properties against alcohols, a material having enhanced barrier properties is demanded.

SUMMARY OF THE INVENTION

An object of the invention is to solve the above problems involved in known fuel containers and provide a thermoplastic resin article which is excellent in the fuel barrier properties and impact resistance and a thermoplastic resin composition capable of producing such a thermoplastic resin article.
As a result of extensive research in view of achieving the above object, the inventors have found that a thermoplastic resin article having a layer formed from a thermoplastic resin composition which contains a polyolefin and a barrier resin having a specific melt viscosity ratio, in addition to a modified polyolefin and/or a styrene copolymer is excellent in the fuel barrier properties and impact resistance. The invention has been accomplished on the basis of this finding.
Namely, the present invention relates to a thermoplastic resin composition containing 50 to 97% by weight of a polyolefin A, 2 to 45% by weight of a barrier resin B, and 1 to 45% by weight of a modified polyolefin Ca and/or a styrene copolymer Cb, wherein the ratio of melt viscosities of the polyolefin A and the barrier resin B satisfies the following formula:

$$0.7 < \mathrm{MV_B/MV_A} < 2.5$$

wherein $MV_A$ is a melt viscosity (Pa·s) of the polyolefin A and $MV_B$ is a melt viscosity (Pa·s) of the barrier resin B, each measured under a shear rate of 100 s$^{-1}$ at a temperature from MP + 2°C to MP + 10°C wherein MP is the melting point of the barrier resin B.
The present invention also relates to a highly barrier thermoplastic resin article having at least one layer made of such a thermoplastic resin composition.

BRIEF DESCRIPTION OF THE DRAWINGS

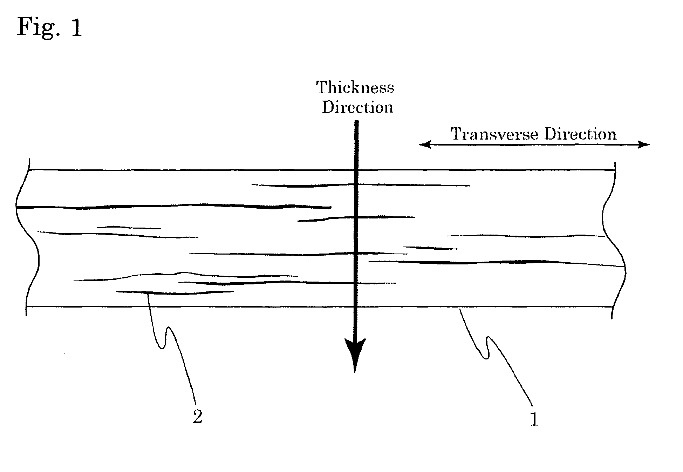

Fig. 1 is a schematic illustration of a TD cross section of a layer made of the thermoplastic resin composition of the invention, showing that the barrier resin B is dispersed in the form of layers throughout the layer of the thermoplastic resin composition.

DETAILED DESCRIPTION OF THE INVENTION

The thermoplastic resin article of the present invention includes at least one layer made of a thermoplastic resin composition containing a polyolefin A, a barrier resin B, and a modified polyolefin Ca and/or a styrene copolymer Cb.

The polyolefin A is selected from various polymers, and preferably selected from homopolymers of ethylenic hydrocarbon having two or more carbon atoms, preferably 2 to 8 carbon atoms such as low density polyethylene, medium density polyethylene, high density polyethylene, linear low density polyethylene, polypropylene, 1-polybutene and 1-polymethylpentene; homopolymers of α-olefin having 3 to 20 carbon atoms; copolymers of α-olefin having 3 to 20 carbon atoms such as ethylene/propylene copolymers, ethylene/propylene/diene terpolymers, ethylene/1-butene copolymers, ethylene/4-methyl-1-pentene copolymers, ethylene/1-hexene copolymers, ethylene/1-octene copolymers, ethylene/1-decene copolymers, propylene/1-butene copolymers, propylene/4-methyl-1-pentene copolymers, propylene/1-hexene copolymers, propylene/1-octene copolymers and propylene/1-decene copolymers; and copolymers of α-olefin having 3 to 20 carbon atoms and cyclic olefin such as norbornene. These polyolefins may be used alone or in combination of two or more. Among the above polyolefins, preferred are resins having a high glass transition point such as polyethylene, polypropylene, 1-polybutene and copolymers of α-olefin and cyclic olefin. The polyolefin A preferably has a melt flow rate (MFR) of from 0.001 to 10 g/10 min when measured at 190°C under 2.16 kgf load. A polyolefin having MFR less than 0.001 g/10 min is difficult to produce, and even if produced, an excessively large load is required in the molding or forming process. If MFR is 10 g/10 min or less, drawdown and reduction in mechanical strength can be avoided during the production of multi-layered articles by a blow molding method, etc.

The modified polyolefin Ca is selected from graft-modified products which are generally used as compatibilizers or adhesives, and produced by modifying the polyolefin recited above with an unsaturated carboxylic acid or its anhydride. Examples of the unsaturated carboxylic acids and their anhydrides include acrylic acid, methacrylic acid, α-ethylacrylic acid, maleic acid, fumaric acid, itaconic acid, citraconic acid, tetrahydrophthalic acid, cloromaleic acid, butenylsuccinic acid and anhydrides of the preceding carboxylic acids, with maleic acid and maleic anhydride being preferred. The modified polyolefin is produced by a graft copolymerization of the polyolefin with the unsaturated carboxylic acid or its anhydride using a known method, for example, by melting the polyolefin in an extruder, etc. and then copolymerizing the molten polyolefin with a graft monomer, by copolymerizing the polyolefin in the state of solution with a graft monomer, or by copolymerizing the polyolefin in the state of water suspension with a graft monomer.

The styrene copolymer Cb is selected from styrene block copolymers each comprising a hydrogenated block copolymer which is produced by partially or completely hydrogenating the copolymer of a vinyl aromatic compound and a conjugated diene compound. Examples of the conjugated diene compounds include 1,3-butadiene, 1,3-pentadiene and isoprene, with 1,3-butadiene being preferred. The styrene copolymer may be modified by the unsaturated carboxylic acid or its anhydride.

The melt flow rate (MFR) of the modified polyolefin Ca and the styrene copolymer Cb is preferably 3 g/10 min or less, more preferably from 0.01 to 3 g/10 min, and still more preferably from 0.1 to 2 g/10 min, when measured at 190°C under 2.16 kgf load. Within the above range, the resultant thermoplastic resin article has sufficient barrier properties.

The barrier resin B is selected from polyamides, ethylene-vinyl alcohol copolymers, vinyl alcohol-based copolymers, and acrylonitrile resins, with polyamide being preferred. Polyamide may include nylon 6, nylon 66, nylon 666 and polyamide produced from m-xylylenediamine and dicarboxylic acid, with the polyamide produced from m-xylylenediamine and dicarboxylic acid being preferred. Preferred is a polyamide in which 70 mol % or more (inclusive of 100 mol %) of the diamine constitutional unit is composed of m-xylylenediamine unit and 70 mol % or more (inclusive of 100 mol %) of the dicarboxylic acid constitutional unit is composed of a $C_4$-$C_{20}$ straight-chain α,ω-aliphatic dicarboxylic acid (hereinafter referred to as "α,ω-dicarboxylic acid") and isophthalic acid in a molar ratio of 30:70 to 100:0.

The starting diamine for the polyamide other than m-xylylenediamine may include aliphatic diamines such as tetramethylenediamine, pentamethylenediamine, 2-methylpentanediamine, hexamethylenediamine, heptamethylenediamine, octamethylenediamine, nonamethylenediamine, decamethylenediamine, dodecamethylenediamine, 2,2,4-trimethylhexamethylenediamine, and 2,4,4-trimethylhexamethylenediamine; alicyclic diamines such as 1,3-bis(aminomethyl)cyclohexane, 1,4-bis(aminomethyl)cyclohexane, 1,3-diaminocyclohexane, 1,4-diaminocyclohexane, bis(4-aminocyclohexyl)methane, 2,2-bis(4-aminocyclohexyl)propane, bis(aminomethyl)decalin (inclusive of structural isomers), and bis(aminomethyl)tricyclodecane (inclusive of structural isomers); and aromatic ring-containing diamines such as bis(4-aminophenyl) ether, p-phenylenediamine, p-xylylenediamine, and bis(aminomethyl)napbthalene (inclusive of structural isomers). The polyamide may contain the units derived from these diamines in a range of 30 mol % or less of the total diamine constitutional unit.

Examples of the $\alpha,\omega$-dicarboxylic acid include succinic acid, glutaric acid, pimelic acid, suberic acid, azelaic acid, adipic acid, sebacic acid, undecanedioic acid and dodecanedioic acid, with adipic acid being preferred.

The molar ratio of the $\alpha,\omega$-dicarboxylic acid unit and the isophthalic acid unit is from 30:70 to 100:0, preferably from 30:70 to 95:5, more preferably from 40:60 to 95:5, and still more preferably from 60:40 to 90:10. By containing the isophthalic acid unit in the above molar range, the barrier properties, particularly, the barrier properties against methanol, ethanol and methyl tert-butyl ether (MTBE) is further enhanced. In addition, as compared when the dicarboxylic acid constitutional unit is composed of only the $\alpha,\omega$-dicarboxylic acid unit, the resultant polyamide has a lower melting point to enable the molding at lower temperatures, thereby reducing the production energy and shortening the molding cycle, and has a higher melt viscosity to improve the moldability by preventing drawdown.

In addition to the $\alpha,\omega$-dicarboxylic acid unit and the isophthalic acid unit, the polyamide may include another dicarboxylic acid unit or monocarboxylic acid unit in a range of 30 mol % or less of the total dicarboxylic acid constitutional unit, which is derived from terephthalic acid, orthophthalic acid, naphthalenedicarboxylic acids such as 1,2-naphthalenedicarboxylic acid, 1,3-naphthalenedicarboxylic acid, 1,4-naphthalenedicarboxylic acid, 1,5-naphthalenedicarboxylic acid, 1,6-naphthalenedicarboxylic acid, 1,7-naphthalenedicarboxylic acid, 1,8-naphthalenedicarboxylic acid, 2,3-naphthalenedicarboxylic acid, 2,6-naphthalenedicarboxylic acid, and 2,7-naphthalenedicarboxylic acid, monocarboxylic acids such as benzoic acid, propionic acid, and butyric acid, polybasic acids such as trimellitic acid and pyromellitic acid, carboxylic anhydrides such as trimellitic anhydride and pyromellitic anhydride.

The polyamide may include a unit derived from lactams such as $\varepsilon$-caprolactam, $\omega$-laurolactam and $\omega$-enantolactam; and amino acids such as 6-aminocaproic acid, 7-aminoheptanoic acid, 11-aminoundecanoic acid, 12-aminododecanoic acid, 9-aminononanoic acid and p-aminomethylbenzoic acid, in an amount not adversely affecting the effect of the invention.

The polyamide is produced by a known method, for example, by melt-polycondensing the diamine component containing m-xylylenediamine in an amount of 70 mol% or more (inclusive of 100 mol %) and the dicarboxylic acid component containing the $\alpha,\omega$-dicarboxylic acid and isophthalic acid in a molar ratio of 30:70 to 100:0 in an amount of 70 mol% or more (inclusive of 100 mol %) in total. The melt polycondensation is not limited to a particular method, and can be performed by a known method such as atmospheric polymerization and pressure polymerization under known conditions. For example, a nylon salt of m-xylylenediamine and adipic acid or a nylon salt of m-xylylenediamine, adipic acid and isophthalic acid is allowed to polymerize in a molten state by heating under pressure in the presence of water while removing the water added and the water which is generated with the progress of polycondensation. Alternatively, the polycondensation may be conducted by adding m-xylylenediamine directly into a molten adipic acid or a molten mixture of adipic acid and isophthalic acid under atmospheric pressure. In this polycondensation, to prevent the solidification of the reaction system, the polycondensation is carried out by increasing the temperature of the reaction system so as to maintain the reaction temperature above the melting points of oligoamide and polyamide being produced while continuously adding m-xylylenediamine.

The relative viscosity of the relatively low-molecular weight polyamide produced by the melt polycondensation (melt polymerization polyamide) is generally 2.28 or less when measured on a solution of one gram of the melt polymerization polyamide in 100 mL of a 96% sulfuric acid at 25°C using a Canon Fenske viscometer, etc. When the relative viscosity is 2.28 or less, the melt polymerization polyamide has a high quality with little gel-like substances and little discoloration. However, such a viscosity is sometimes low for the production of films, sheets and the multi-layered containers such as bottles. In this case, it is generally employed to increase the viscosity by solid polymerization of the polyamide. However, a polyamide including the isophthalic acid unit in the above range has an increased melt viscosity and a lowered melting point. Therefore, the molding temperature (from melting point + 10°C to melting point + 30°C, but from 180 +10°C to 180 + 30°C for amorphous polyamide) can be reduced while ensuring a sufficient melt viscosity at the molding temperature. Thus, the use of isophthalic acid can eliminate the step for increasing the viscosity by solid polymerization, etc. and make the production economically advantageous.

The melting point of the polyamide is preferably from 160 to 240°C, more preferably from 170 to 235°C, and still more preferably from 180 to 230°C. By bringing the melting point of the polyamide close to those of the polyolefin A, the modified polyolefin Ca and the styrene copolymer Cb, the molding defects such as uneven thickness due to the difference between the molding temperatures optimum for the resins and the generation of odor and discoloration due to the degradation of resins can be avoided during the production of multi-layered articles.

The melt viscosity of the polyamide is preferably from 800 to 8000 Pa·s, more preferably from 1000 to 6000 Pa·s when measured at a temperature from its melting point + 2°C to its melting point + 10°C under a shear rate of 100 s$^{-1}$. By regulating the melt viscosity within the above range, the occurrence of drawdown and the reduction of mechanical strength can be prevented during the production of multi-layered articles by blow molding. Polyamide having a melt viscosity of higher than 8000 Pa·s is difficult to produce.

The glass transition point of the polyamide is preferably from 80 to 130°C. By regulating the glass transition point to 80°C or higher, excellent fuel barrier properties at high temperatures are achieved.

The crystallinity of the polyamide is preferably 25% or more, and more preferably from 25 to 40% when measured by a differential scanning calorimetry (DSC, at 25 to 300°C and a temperature rise rate of 10°C/min). Within the above range, the polyamide is not made into particles or fine particles because of melting and plasticization during extrusion molding, thereby ensuring the dispersion of the polyamide in the form of layers throughout the layer made of the thermoplastic resin composition, to enhance the barrier properties of the thermoplastic resin article.

The total heat quantity of the polyamide is preferably -20 J/g or less, more preferably from -60 to -20 J/g, and still more preferably from -50 to -25 J/g. Within the above range, the polyamide is not made into particles or fine particles because of melting and plasticization during extrusion molding, thereby ensuring the dispersion of the polyamide in the form of layers throughout the layer made of the thermoplastic resin composition, to enhance the barrier properties of the thermoplastic resin article.

The concentration of terminal amino group of the polyamide is preferably 40 μequiv/g or less, more preferably from 3 to 40 μequiv/g, and still more preferably from 10 to 30 μequiv/g. The concentration of terminal carboxyl group is preferably from 40 to 100 μequiv/g. Within the above ranges, the barrier properties of the thermoplastic resin article are enhanced.

The polyamide is preferably heat-treated before use. For example, the polyamide is gently heated for crystallization without causing fuse-bonding in a batch heater such as a rotary drum in the presence of water in an inert gas atmosphere or under reduced pressure, and then, further heat-treated. In another method, the polyamide is heated for crystallization in an agitated trough heater in an inert gas atmosphere, and then, further heat-treated in a hopper heater in an inert gas atmosphere. In still another method, the polyamide is crystallized in an agitated trough heater, and then, heat-treated in a batch heater such as a rotary drum. Of the above methods, preferred is a method in which the crystallization and the heat treatment are performed in the same batch heater. The heat treatment is preferably performed by raising the temperature from 70°C to 120°C over 0.5 to 4 h to crystallize the melt polymerization polyamide in the presence of 0.1 to 30 % by weight of water based on the melt polymerization polyamide, and then, heat-treating the crystallized polyamide at a temperature from M - 50°C to M - 10°C, wherein M is the melting point of the melt polymerization polyamide, for 1 to 12 h in an inert gas atmosphere or under reduced pressure.

The barrier resin B may be added with 0.1 to 10 % by weight of a polycarbodiimide resin. The polycarbodiimide resin is not limited to specific type as far as it includes the carbodiimide linkage, and examples thereof include aromatic or aliphatic polycarbodiimide resins having at least one carbodiimide linkage, with aliphatic polycarbodiimide resins being preferred. By adding 0.1% by weight or more, the effect of increasing the viscosity is obtained, to enhance the barrier properties of resultant articles. By adding 10% by weight or less, the excessive increase of the viscosity can be avoided, to enhance the barrier properties of resultant articles. The polycarbodiimide resin can be produced from an organic diisocyanate by a known method, in which the degree of polymerization may be controlled by capping the terminal end.

The thermoplastic resin composition contains from 50 to 97 % by weight of polyolefin A, from 2 to 45 % by weight of the barrier resin B, and from 1 to 45 % by weight of the modified polyolefin Ca and/or the styrene copolymer Cb, preferably from 55 to 95 % by weight of the polyolefin A, from 3 to 40 % by weight of the barrier resin B, and from 2 to 40 % by weight of the modified polyolefin Ca and/or the styrene copolymer Cb, and more preferably from 60 to 92 % by weight of the polyolefin A, from 4 to 35 % by weight of the barrier resin B, and from 4 to 35 % by weight of the modified polyolefin Ca and/or the styrene copolymer Cb. The above percentages are based on the total of the polyolefin A, the barrier resin B, the modified polyolefin Ca, and the styrene copolymer Cb.

If the blending amount of the polyolefin A is less than 50% by weight, the moldability of the resin composition and the impact resistance of the resultant articles are reduced. If exceeding 97% by weight, the fuel barrier properties are unfavorably reduced. If the blending amount of the barrier resin B is less than 2% by weight, the fuel barrier properties will be poor, and the impact resistance will be reduced if exceeding 45% by weight. If the blending amount of the modified polyolefin Ca and/or the styrene copolymer Cb is less than 1% by weight, the affinity between the polyolefin A and the barrier resin B will be reduced to result in the reduction of the impact resistance. If exceeding 45% by weight, it will become difficult to allow the barrier resin B to be dispersed in the form of layers.

The ratio of the melt viscosities of the polyolefin A and the barrier resin B satisfy the following equation:

$$0.7 < MV_B/MV_A < 2.5$$

wherein $MV_A$ is a melt viscosity (Pa·s) of the polyolefin A and $MV_B$ is a melt viscosity (Pa·s) of the barrier resin B, each measured under a shear rate of 100 s$^{-1}$ at a temperature from MP + 2°C to MP + 10°C wherein MP is a melting point of the barrier resin B. $MV_A$ and $MV_B$ are measured at the same temperature within the above range for the measuring temperature. The ratio, $MV_B/MV_A$, is preferably from 0.8 to 2.5. If the melt viscosity ratio is 0.7 or less, the effect of increasing the barrier properties is insufficient and the impact resistance is reduced. If the melt viscosity ratio is 2.8 or more, a sufficient effect of increasing the barrier properties is not obtained because the barrier resin B is likely to disperse in the form of particles.

The thermoplastic resin composition of the invention is produced by mixing the polyolefin A, the barrier resin B, and the modified polyolefin Ca and/or the styrene copolymer Cb. The thermoplastic resin composition may optionally contain a smectite treated with an organic swelling agent (smectite D). It is particularly preferred that the smectite D is uniformly dispersed in the barrier resin B. Smectite is dioctahedral type or trioctahedral type phyllosilicate having an electric charge density of 0.25 to 0.6. Examples of the dioctahedral type phyllosilicates include montmorillonite and beidellite. Examples of the trioctahedral type phyllosilicates include hectorite and saponite. Of these phyllosilicates, preferred is montmorillonite.

The smectite D referred to herein is a phyllosilicate having its interlaminar spacing spread before use by contacting the phyllosilicate with an organic swelling agent such as high-molecular compound type and organic compound type.

The organic swelling agent is selected preferably from quaternary ammonium salts, more preferably from quaternary ammonium halides such as chloride and bromide, and still more preferably quaternary ammonium salts having at least one alkyl or alkenyl group having 12 or more carbon atoms.

Examples of the organic swelling agents include trimethylalkylammonium salts such as trimethyldodecylammonium salts, trimethyltetradecylammonium salts, trimethylhexadecylammonium salts, trimethyloctadecylammonium salts and trimethyleicosylammonium salts; trimethylalkenylammonium salts such as trimethyloctadecenylammonium salts and trimethyloctadecadienylammonium salts; triethylalkylammonium salts such as triethyldodecylammonium salts, triethyltetradecylammonium salts, triethylhexadecylammonium salts and triethyloctadecylammonium salts; tributylalkylammonium salts such as tributyldodecylammonium salts, tributyltetradecylammonium salts, tributylhexadecylammonium salts and tributyloctadecylammonium salts; dimethyldialkylammonium salts such as dimethyldidodecylammonium salts, dimethylditetradecylammonium salts, dimethyldihexadecylammonium salts, dimethyldioctadecylammonium salts and dimethylditallowammonium salts; dimethyldialkenylammonium salts such as dimethyldioctadecenylammonium salts and dimethyldioctadecadienylammonium salts; diethyldialkylammonium salts such as diethyldidodecylammonium salts, diethylditetradecylammonium salts, diethyldihexadecylammonium salts and diethyldioctadecylammonium salts; dibutyldialkylammonium salts such as dibutyldidodecylammonium salts, dibutylditetradecylammonium salts, dibutyldihexadecylammonium salts and dibutyldioctadecylammonium salts; methylbenzyldialkylammonium salts such as methylbenzyldihexadecylammonium salts; dibenzyldialkylammonium salts such as dibenzyldihexadecylammonium salts; trialkylmethylammonium salts such as tridodecylmethylammonium salts, tritetradecylmethylammonium salts and trioctadecylmethylammonium salts; trialkylethylammonium salts such as tridodecylethylammonium salts; trialkylbutylammonium salts such as tridodecylbutylammonium salts; and ω-amino acids such as 4-amino-n-butyric acid, 6-amino-n-caproic acid, 8-aminocaprylic acid, 10-aminodecanoic acid, 12-aminododecanoic acid, 14-aminotetradecanoic acid, 16-amino-hexadecanoic acid and 18-amino-octadecanoic acid. In addition, ammonium salts having a hydroxyl group and/or an ether group may also be used as the organic swelling agent. Examples thereof include methyl dihydroxyethyl hydrogenated tallow ammonium salts and quaternary ammonium salts containing at least one alkylene glycol residue such as methyldialkyl(PAG)ammonium salts, ethyldialkyl(PAG)ammonium salts, butyldialkyl(PAG)ammonium salts, dimethylbis(PAG)ammonium salts, diethylbis(PAG)ammonium salts, dibutylbis(PAG)ammonium salts, methylalkylbis(PAG)ammonium salts, ethylalkylbis(PAG)ammonium salts, butylalkylbis(PAG)ammonium salts, methyltri(PAG)ammonium salts, ethyltri(PAG)amnonium salts, butyltri(PAG)ammonium salts and tetra(PAG)ammonium salts wherein the "alkyl" represents an alkyl group having 12 or more carbon atoms such as dodecyl, tetradecyl, hexadecyl, octadecyl and eicosyl; and PAG represents a polyalkylene glycol residue, preferably a polyethylene glycol residue or a polypropylene glycol residue having 20 carbon atoms or less. Of these organic swelling agents, preferred are trimethyldodecylammonium salts, trimethyltetradecylammonium salts, trimethylhexadecylammonium salts, trimethyloctadecylammonium salts, dimethyldidodecylammonium salts, dimethylditetradecylammonium salts, dimethyldihexadecylammonium salts, dimethyldioctadecylammonium salts, dimethylditallowammonium salts and methyl dihydroxyethyl hydrogenated tallow ammonium salts. These organic swelling agents may be used alone or in combination of two or more.

The blending amount of the smectite D is preferably from 0.3 to 20 parts by weight, and more preferably from 1 to 15 parts by weight based on 100 parts by weight of the barrier resin B. When blended 0.3 part by weight or higher, the gas barrier properties can be further improved. A blending amount exceeding 20 parts by weight creates no additional effect on improving the barrier properties.

The smectite D is preferably melt-kneaded with the barrier resin B to form a uniform mixture which is then blended with the polyolefin A and the modified polyolefin Ca and/or the styrene copolymer Cb. The smectite D should be uniformly dispersed throughout the barrier resin B without forming local agglomerates. The uniform dispersion referred to herein means that the layers of phyllosilicate in the barrier resin B is separated into flat plates, 50% or more of which are spaced at an interlaminar spacing of 5 nm or more. The interlaminar spacing means a distance between the gravity centers of flat plates. The larger the interlaminar spacing, the smectite D is dispersed more uniformly to give the final film, sheet and hollow container having a good appearance such as transparency and improved barrier properties against gaseous substances such as oxygen and carbon dioxide gas.

The melt kneading of the smectite D and the barrier resin B is performed in various general extruders such as single-screw or twin-screw extruders, preferably in the twin-screw extruder in view of productivity and flexibility. When the barrier resin B is polyamide, the smectite D is preferably blended with the polyamide by adding it under stirring during the melt-polymerization for producing the polyamide.

The melt-kneading is preferably performed by using a screw having at least one reverse flighted element and/or kneading disk for forming a dwelling zone and allowing the barrier resin B and the smectite D to be partly retained at each dwelling zone, while controlling the melt-kneading temperature to 180 to 260°C and the residence time to 5 min or less.

Melt-kneading temperatures outside the above range are likely to cause a poor dispersion of the smectite D. The dwelling zone of the screw improves the dispersion of the smectite D. In view of a good dispersibility and the prevention of thermal decomposition and gel formation, the melt-kneading time is preferably from 1 to 5 min.

The polyamide resin B containing or not containing the smectite D is preferably made into pellets. To enhance the compatibility with the polyolefin A and increasing the mechanical strength of resultant shaped articles, the pellets may be made into a multi-layered structure, for example, composed of an outer layer of the modified polyolefin Ca and/or the styrene copolymer Cb and an inner layer of the barrier resin B. In such multi-layered pellets, the weight ratio of the modified polyolefin Ca and/or the styrene copolymer Cb and the barrier resin B is preferably from 95:5 to 5:95.

The thermoplastic resin composition may be mixed with recovered solid products (reclaimed resins) containing at least one resin selected from the polyolefin A, the barrier resin B, the modified polyolefin Ca, and the styrene copolymer Cb. The origin of the solid products is not limited, for example, recovered flashes and defectives which are produced in the forming or molding process of such resins are usable. The recovered flashes and defectives may be crushing or may be reprocessed into pellets by a single or twin-screw extruder. The size was not critical, and preferably one centimeter square in view of preventing the blocking during the extrusion. If containing polyamide, the reclaimed resins are preferably used immediately after its molding or after dehumidification or drying so as to reduce the moisture content to 0.5% by weight or less, because the foaming due to moisture absorption can be prevented.

The amount of the reclaimed resins to be added is preferably from 5 to 300 parts by weight based on 100 parts by weight in total of the polyolefin A, the barrier resin B, the modified polyolefin Ca and the styrene copolymer Cb. If exceeding 300 parts by weight, the barrier properties may be reduced. According to the content of each resin in the reclaimed resins, the amounts of the polyolefin A, the barrier resin B, and the modified polyolefin Ca and/or the styrene copolymer Cb to be blended are suitably regulated so as to make the content of each component in the thermoplastic resin composition within the range mentioned above.

The thermoplastic resin composition of the invention is formed into the thermoplastic resin article by a known forming or molding method such as a direct extrusion blow forming, a molding using a cylindrical die and a sheet molding using a T-die. The forming or molding temperature is preferably from MP + 2°C to MP + 10°C wherein MP is the melting point of the barrier resin B. The molding using an extruder is conducted by controlling the temperature and the rotation of screw within suitable ranges so as to ensure the layered dispersion of the barrier resin B, without using a means such as a breaker plate for enhancing the kneading effect. The conditions of each method is not particularly limited, and one of ordinary skill in the art can easily select or determine such conditions from the molding and forming conditions employed in the polymer art.

In the thermoplastic resin article of the invention, it is preferred that the barrier resin B is dispersed in the form of layers throughout the layer made of the thermoplastic resin composition, particularly, the barrier resin B and the other resins form a multi-layered structure in the layer. Each dispersed layer of the barrier resin B is not necessarily required to be continuous in MD (machine direction) and/or TD (transverse direction). As seen from Fig. 1, even when the dispersed layer 2 is discontinuous in TD, a dispersion state in which at least one layer of the barrier resin B is present along the thickness direction of the layer 1 which is made of the thermoplastic resin composition is achieved in the present invention. Namely, in an arbitrary TD cross section of the layer 1 of the thermoplastic resin composition, any line crossing the layer 1 along its thickness direction invariably intersects at least one dispersed layer 2 which extends in TD. The same is also true for an arbitrary MD cross section of the layer 1 of the thermoplastic resin composition. With such a dispersion state of the barrier resin B, the thermoplastic resin article of the invention exhibits excellent fuel barrier properties. If failing to meet the requirements of the invention, a dispersion state in which some lines crossing the layer of the thermoplastic resin composition along its thickness direction do not intersect the dispersed layer is obtained, or the barrier resin does not disperse in the form of layers, instead disperses in the form of particles, thereby failing to attain high fuel barrier properties.

The thermoplastic resin article of the present invention has a highly barrier layer which is made of the thermoplastic resin composition mentioned above. In view of physical strength, the thermoplastic resin article is preferably a multi-layered article including at least one layer of the thermoplastic resin composition and at least one reinforcing layer made of polyolefin, polystyrene, polyester, polycarbonate or polyamide. Examples of the polyolefin for the reinforcing layer include linear low-density polyethylene, low-density polyethylene, medium-density polyethylene, high-density polyethylene, ultrahigh-molecular, high-density polyethylene, polypropylene, copolymers of at least two olefins selected from ethylene, propylene, butene, etc., and mixtures thereof. Of these polyolefins, polyethylene, polypropylene, and the ultrahigh-molecular, high-density polyethylene is preferred in view of the prevention of drawdown in blow molding process and its excellence in impact resistance, fuel-swelling resistance and water resistance. The polyolefins, polystyrenes, polyesters, polycarbonates and polyamides for the reinforcing layer may be mixed with each other, or may be mixed with another resin such as elastomers or with various additives such as carbon black and flame retardants.

Between the layers of the multi-layered article, for example, between the highly barrier layer made of the thermoplastic resin composition and the reinforcing layer, an adhesive resin layer (adhesive layer) may be interposed. As the adhesive resin, modified polyethylenes, modified polypropylenes and copolymers of olefins such as ethylene, propylene and butene are usable when the highly barrier layer of the thermoplastic resin composition is adhesively bonded to the reinforcing layer made of polyolefin; and ethylene-vinyl acetate copolymers, alkali or alkaline earth metal-crosslinked ethylene-acrylic acid copolymers and ethylene-acrylic ester copolymers are usable when the highly barrier layer of the thermoplastic resin composition is adhesively bonded to the reinforcing layer made of polyester or polycarbonate, although not particularly limited thereto.

The thickness of each layer depends on the shape of the multi-layered article, and preferably, 0.005 to 5 mm in average for the highly barrier layer of the thermoplastic resin composition, 0.005 to 10 mm in average for the reinforcing layer and 0.005 to 5 mm in average for the adhesive layer.

The flash and molding defect may be re-melted and recycled as a recycle layer of the multi-layered article. The recycle layer is preferably disposed outside the highly barrier layer of the thermoplastic resin composition in view of mechanical strength.

The layer of the thermoplastic resin composition may optionally contain lubricant, mold-release agent, antioxidant, processing stabilizer, heat stabilizer, ultraviolet absorber, phyllosilicate, nucleating agent or inorganic or organic metal salt or complex of Co, Mn, Zn, etc., unless the addition thereof adversely affects the objects of the invention.

The multi-layered article of the invention includes multi-layered containers in the form of bottle, cup, tray and tank, multi-layered tube, multi-layered parts, etc. each being a laminated structure composed of at least one highly barrier layer of the thermoplastic resin composition, at least one reinforcing layer and at least one optional adhesive layer. The multi-layered article may be produced by a melt molding method such as multi-layer extrusion, extrusion followed by thermoforming and blow molding, or a co-injection molding method such as sandwich forming and two-color injection molding, although not limited thereto. More specifically, the multi-layered article is produced by a method in which a multi-layered sheet formed by a T-die extruder is thermoformed and then bonded by adhesive or welding; a method in which a multi-layered cylindrical parison from an injection molding machine or an extruder is blow-molded; or a co-injection molding method in which two or more kinds of molten resins are sequentially injected into a mold cavity.

The present invention will be explained in more detail by reference to the following example which should not be construed to limit the scope of the present invention. In the followings, polyamides and shaped articles were evaluated by the following methods.

(1) Melting point, Crystallinity and Heat quantity

Measured under the following conditions by a differential scanning calorimeter "DSC-50" available from Shimadzu Corporation.

Standard substance: $\alpha$-alumina
Sample: 10 mg
Temperature rise rate: 10°C/min
Measuring temperature range: 25 to 300°C
Atmosphere: nitrogen gas (30 ml/min)
Crystallinity: calculated from the equation, $|Q_t|/|Q_{100}|$, wherein $|Q_t|$ is an absolute value of total heat quantity and $|Q_{100}|$ is an absolute value of absorbed heat when 100% of polyamide was crystallized.

(2) Melt viscosity

Measured by "Capillograph 1D" available from Toyo Seiki Seisaku-Sho, Ltd. using an orifice of 1 mm $\phi \times$ 10 mm.

(3) Concentration of terminal amino group

Accurately weighed polyamide (0.3 to 0.5 g) was dissolved in 30 ml of a mixed solvent, phenol/ethanol = 4/1 by volume, at 20 to 30°C under stirring. The end amino concentration was determined by neutralization titration of the resulting complete solution with a 1/100 N hydrochloric acid using an automatic titration device available from Mitsubishi Chemical Corp.

(4) Fuel permeation

Each thermoplastic resin composition shown in Tables 3 to 5 was formed into a 400-mL blown container (thermoplastic resin article) of about 120 g having an average wall thickness of 2 mm by a hollow molding machine composed of a 60-mm single screw extruder. The container was filled with 300 ml of fuel (isooctane/toluene/ethanol = 45/45/10 by volume) and sealed. The fuel-filled container was allowed to stand in an explosion-proof type constant temperature/humidity chamber kept under conditions of 40°C/65% RH for 30 days. The loss of weight (g) was taken as the fuel permeation.

(5) Dispersion of barrier resin

A cross section taken along TD of a blown container, which had been formed in the same manner as in the evaluation of fuel permeation, was applied with a diluted iodine tincture (available from Tsukishima Yakuhin, Co., Ltd.) to dye the polyamide in reddish brown color. Then, the dispersion state was observed under a microscope.

(6) Impact resistance

Each thermoplastic resin composition shown in Tables 3 to 5 was formed into a 400-mL blown container in the same manner as in the evaluation of fuel permeation. The blown container was filled with about 400 ml of water and sealed. The water-filled container was allowed to drop from a height of about 2 m. The dropping was repeated to determine the number of droppings repeated until the container was broken.

REFERENCE EXAMPLE 1

A dry blend of 97 parts by weight of Barrier Resin B1 ("MX Nylon S6007" manufactured by Mitsubishi Gas Chemical Company, Inc.; $|Q_{100}|$ = 151 J/g) and 3 parts by weight of montmorillonite ("Orben" tradename of Shiraishi Kogyo Co., Ltd.) was fed at a rate of 12 kg/h from a metering feeder into a twin-screw extruder of a cylinder diameter of 37 mm equipped with a strong knead screw having a dwelling zone formed by a reverse flighted element. The blend was melt-kneaded under conditions of a cylinder temperature of 200°C, a screw rotation speed of 500 rpm and a dwelling time of 75 s. The molten strand from the extruder was cooled by cooling air, solidified and then pelletized to obtain Barrier Resin B4.

REFERENCE EXAMPLE 2

Into a jacketed 50-L reaction vessel equipped with a stirrer, a partial condenser, a cooler, a dropping tank and a nitrogen inlet, were charged 14.2 kg (97.1 mol) of adipic acid and 1.0 kg (6.2 mol) of isophthalic acid. The inner atmosphere was fully replaced with nitrogen, and the contents were made into a uniform slurry of isophthalic acid in molten adipic acid at 160°C in a small amount of nitrogen stream. To the slurry, was added dropwise 14.0 kg (102.6 mol) of m-xylylenediamine over one hour under stirring. During the addition, the inner temperature was continuously raised to 247°C. The water which was produced as the addition of m-xylylenediamine proceeded was removed from the reaction system through the partial condenser and the cooler. After completion of adding m-xylylenediamine, the inner temperature was raised to 260°C and the reaction was continued for one hour. The resultant polymer was taken out of the reaction vessel in the form of strand through a lower nozzle, water-cooled and then cut into pellets to obtain melt polymerization Polyamide 1 (melting point = 232°C).

Polyamide 1 and water (1% by weight of Polyamide 1) were charged in a stainless rotary drum heater which was then rotated at 10 rpm. After fully replacing the inner atmosphere with nitrogen, the temperature of reaction system was raised from room temperature to 150°C in a small amount of nitrogen flow, during which the temperature was raised from 70°C to 120°C over one hour to crystallize Polyamide 1. After reaching 150°C, the pressure of reaction system was reduced to 1 Torr, while further raising the temperature to 210°C over 110 min. The reaction was allowed to proceed at 210°C for 180 min. Thereafter, the reaction system was returned to atmospheric pressure and the temperature was lowered under nitrogen flow. When reaching 60°C, pellets were taken out of the heater to obtain Barrier Resin B5.

REFERENCE EXAMPLE 3

Into a jacketed 50-L reaction vessel equipped with a stirrer, a partial condenser, a cooler, a dropping tank and a nitrogen inlet, were charged 12 kg (82.11 mol) of adipic acid and 3.41 kg (20.53 mol) of isophthalic acid. The inner atmosphere was fully replaced with nitrogen, and the contents were melted at 160°C in a small amount of nitrogen stream. To the molten mixture, was added dropwise 13.75 kg (100.95 mol) of m-xylylenediamine over 210 min under stirring. During the addition, the inner temperature was continuously raised to 254°C. The water which was produced as the addition of m-xylylenediamine proceeded was removed from the reaction system through the partial condenser and the cooler. After completion of adding m-xylylenediamine, the inner temperature was raised to 260°C and the reaction was continued for one hour. The resultant polymer was taken out of the reaction vessel in the form of strand through a lower nozzle, water-cooled and then cut into pellets to obtain melt polymerization Polyamide 2.

A dry blend of Polyamide 2 containing 1% by weight of polycarbodiimide resin ("Carbodilite LA1" manufactured by Nisshinbo Industries, Inc.) was fed at a rate of 12 kg/h from a metering feeder into a twin-screw extruder of a cylinder diameter of 37 mm equipped with a strong knead screw having a dwelling zone formed by a reverse flighted element. The blend was melt-kneaded under conditions of a cylinder temperature of 260°C and a screw rotation speed of 100 rpm. The molten strand from the extruder was cooled by cooling air, solidified and then pelletized to obtain Barrier Resin B6.

REFERENCE EXAMPLE 4

Barrier Resin B1 was fed at a rate of 12 kg/h from a metering feeder into a twin-screw extruder of a cylinder diameter of 37 mm having a dwelling zone formed by a reverse flighted element. Barrier Resin B1 was melt-kneaded under conditions of a cylinder temperature of 270°C and a screw rotation speed of 100 rpm. The molten strand from the extruder was cooled by cooling air, solidified and then pelletized to obtain Barrier Resin B7 ($|Q_{100}|$ = 151 J/g).

REFERENCE EXAMPLE 5

Into a jacketed 50-L reaction vessel equipped with a stirrer, a partial condenser, a cooler, a dropping tank and a nitrogen inlet, was charged 10 kg of adipic acid. The inner atmosphere was fully replaced with nitrogen, and adipic acid was uniformly melted at 160°C in a small amount of nitrogen stream. To the molten adipic acid, was added dropwise 9.38 kg of m-xylylenediamine over 170 min under stirring. During the addition, the inner temperature was continuously raised to 245°C. The water which was produced as the addition of m-xylylenediamine proceeded was removed from the reaction system through the partial condenser and the cooler. After completion of adding m-xylylenediamine, the inner temperature was raised to 260°C and the reaction was continued for one hour. The resultant polymer was taken out of the reaction vessel in the form of strand through a lower nozzle, water-cooled and then cut into pellets to obtain melt polymerization Polyamide 3 (melting point = 240°C).

Pellets of Polyamide 3 and water (1% by weight of Polyamide 3) were charged in a 250-L solid polymerization vessel which was then rotated at 18 rpm. The inner pressure was reduced to 5 Torr or less, and then, returned to atmospheric pressure by nitrogen of 99% by volume purity or higher. These operations were repeated three times. Then, the temperature was raised from room temperature to 140°C, during which the temperature was raised from 70°C to 120°C over one hour to crystallize Polyamide 3. At the time when the temperature of pellets reached 140°C, the evacuation was started while further raising the temperature. After 110 min from starting the evacuation, the temperature of pellets reached 200°C, at which the reaction was allowed to proceed for 60 min, then, the heating was stopped. After returning the vessel to atmospheric pressure, Barrier Resin B8 ($|Q_{100}|$ = 151 J/g) was obtained.

EXAMPLE 1

A mixture of Polyolefin A1 (high density polyethylene "Novatech HB-431" available from Japan Polyethylene Corporation), Barrier Resin B1 ("MX Nylon S6007" manufactured by Mitsubishi Gas Chemical Company, Inc.; $|Q_{100}|$ = 151 J/g), and Modified Polyolefin C1 ("Admer GT6" manufactured by Mitsui Chemicals, Inc.; MFR = 0.9 g/10 min at 190°C under 2.16 kgf load) in proportions shown in Table 3 was formed into a 400-mL container by a hollow molding machine composed of a 60-mm single screw extruder. The molding temperature was 245°C. The results of evaluations on the container are shown in Table 3. The properties of polyolefin and barrier resin used are shown in Tables 1 and 2.

EXAMPLE 2

A container was produced in the same manner as in Example 1 except for using Barrier Resin B5 in place of barrier resin B1 and changing the molding temperature to 235°C. The results are shown in Table 3.

EXAMPLE 3

A container was produced in the same manner as in Example 1 except for using Polyolefin A2 ("J-REX KBY47C" manufactured by Japan Polyolefins Co., Ltd.) and Barrier Resin B6 in place of Polyolefin A1 and Barrier Resin B1 and changing the molding temperature to 210°C. The results are shown in Table 3.

EXAMPLE 4

A container was produced in the same manner as in Example 1 except for using Modified Polyolefin C2 ("Modic M505" manufactured by Mitsubishi Chemical Corp.; MFR = 5 g/10 min at 190°C and 2.16 kgf load) in place of Modified Polyolefin C1. The results are shown in Table 3.

EXAMPLE 5

A container was produced in the same manner as in Example 1 except for using Barrier Resin B4 in place of Barrier Resin B1. The results are shown in Table 3.

EXAMPLE 6

A container was produced in the same manner as in Example 1 except for using Barrier Resin B8 in place of Barrier Resin B1. The results are shown in Table 4.

COMPARATIVE EXAMPLE 1

A container was produced in the same manner as in Example 1 except for using Barrier Resin B2 ("MX Nylon S6001" manufactured by Mitsubishi Gas Chemical Company, Inc.; $|Q_{100}|$ = 151 J/g) in place of Barrier Resin B1. The results are shown in Table 5.

COMPARATIVE EXAMPLE 2

A container was produced in the same manner as in Example 1 except for using Barrier Resin B3 ("MX Nylon S6121" manufactured by Mitsubishi Gas Chemical Company, Inc.; $|Q_{100}|$ = 151 J/g) in place of Barrier Resin B1. The results are shown in Table 5.

COMPARATIVE EXAMPLE 3

A container was produced in the same manner as in Example 1 except for using Polyolefin A2 ("J-REX KBY47C" manufactured by Japan Polyolefins Co., Ltd.) and Barrier Resin B5 in place of Polyolefin A1 and Barrier Resin B1 and changing the molding temperature to 235°C. The results are shown in Table 5.

COMPARATIVE EXAMPLE 4

A container was produced in the same manner as in Example 1 except for using only Polyolefin A1. The results are shown in Table 5.

EXAMPLE 7

A container was produced in the same manner as in Example 1 except for using Barrier Resin B7 in place of Barrier Resin B1. The results are shown in Table 4.

Table 1

| | Melting Point | Melt Viscosity (Pa·s) | | |
|---|---|---|---|---|
| | (°C) | 245°C | 235°C | 210°C |
| Polyolefin | | | | |
| A1 | - | 950 | 1040 | 1280 |
| A2 | - | - | 2750 | 3100 |

(continued)

| | Melting Point | Melt Viscosity (Pa·s) | | |
|---|---|---|---|---|
| | (°C) | 245°C | 235°C | 210°C |
| Polyolefin Barrier Resin | | | | |
| B1 | 240 | 1060 | - | - |
| B2 | 240 | 650 | - | - |
| B3 | 240 | 2640 | - | - |
| B4 | 240 | 1030 | - | - |
| B5 | 232 | - | 1530 | - |
| B6 | 207 | - | - | 5420 |
| B7 | 240 | 1060 | - | - |
| B8 | 240 | 1050 | - | - |

Table 2

| | Crystallinity (%) | Total Heat Quantity (J/g) | Concentration of Terminal Amino Group ($\mu$equiv/g) |
|---|---|---|---|
| Barrier Resin | | | |
| B1 | 31 | -47 | 18 |
| B2 | 30 | -45 | 43 |
| B3 | 32 | -47 | 10 |
| B4 | 15 | -23 | 45 |
| B5 | 31 | -47 | 17 |
| B6 | 1 | -1 | 44 |
| B7 | 9 | -14 | 20 |
| B8 | 28 | -42 | 77 |

Table 3

| | Examples | | | | |
|---|---|---|---|---|---|
| | 1 | 2 | 3 | 4 | 5 |
| Composition (wt %) | | | | | |
| A1 | 75 | 75 | - | 75 | 75 |
| A2 | - | - | 75 | - | - |
| B1 | 5 | - | - | 5 | - |
| B4 | - | - | - | - | 5 |
| B5 | - | 5 | - | - | - |
| B6 | - | - | 5 | - | - |
| C1 | 20 | 20 | 20 | - | 20 |
| C2 | - | - | - | 20 | - |
| Ratio of melt viscosities | 1.1 | 1.5 | 1.7 | 1.1 | 1.1 |
| Dispersion of barrier resin | layer | layer | layer | layer | layer |
| Fuel permeation (g) | 0.9 | 0.8 | 0.7 | 2.4 | 0.7 |
| Impact resistance (number of droppings) | > 5 | > 5 | > 5 | > 5 | > 5 |

Table 4

|  | Examples | |
| --- | --- | --- |
|  | 6 | 7 |
| Composition (wt %) | | |
| A1 | 75 | 75 |
| B7 | - | 5 |
| B8 | 5 | - |
| C1 | 20 | 20 |
| Ratio of melt viscosities | 1.1 | 1.1 |
| Dispersion of barrier resin | layer | layer |
| Fuel permeation (g) | 4 | 3 |
| Impact resistance (number of droppings) | 5 | > 5 |

Table 5

|  | Comparative Examples | | | |
| --- | --- | --- | --- | --- |
|  | 1 | 2 | 3 | 4 |
| Composition (wt %) | | | | |
| A1 | 65 | 75 | - | 100 |
| A2 | - | - | 75 | - |
| B2 | 5 | - | - | - |
| B3 | - | 5 | - | - |
| B5 | - | - | 5 | - |
| C 1 | 30 | 20 | 20 | - |
| Ratio of melt viscosities | 0.7 | 2.8 | 0.6 | - |
| Dispersion of barrier resin | layer | particle | particle | - |
| Fuel permeation (g) | 4.7 | 6 | 7 | 19 |
| Impact resistance (number of droppings) | 2 | > 5 | > 5 | > 5 |

The thermoplastic resin articles produced from the thermoplastic resin composition of the invention are excellent in the barrier properties and impact resistance, and are suitable for use as fuel containers, tubes, parts, etc.

**Claims**

1. A thermoplastic resin composition comprising 50 to 97% by weight of a polyolefin A, 2 to 45% by weight of a barrier resin B, and 1 to 45% by weight of a modified polyolefin Ca and/or a styrene copolymer Cb, wherein the ratio of the melt viscosities of the polyolefin A and the barrier resin B satisfies the following formula:

$$0.7 < MV_B / MV_A \leq 2.5$$

wherein $MV_A$ is the melt viscosity (Pa · s) of the polyolefin A and $MV_B$ is the melt viscosity (Pa · s) of the barrier resin B, each measured under a shear rate of 100 s$^{-1}$ at a temperature from MP + 2°C to MP + 10°C wherein MP is the melting point of the barrier resin B.

2. The thermoplastic resin composition according to claim 1, wherein the barrier resin B is a polyamide which is constituted by a diamine constitutional unit and a dicarboxylic acid constitutional unit, 70 mol % or more of the diamine constitutional unit being m-xylylenediamine unit, and 70 mol % or more of the dicarboxylic acid constitutional unit being a $C_4$-$C_{20}$ straight-chain, $\alpha,\omega$-aliphatic dicarboxylic acid unit and isophthalic acid unit in a molar ratio of 30:70 to 100:0.

3. The thermoplastic resin composition according to claim 2, wherein the crystallinity of the polyamide is 25% or more when measured by differential scanning calorimetry at a measuring temperature from 25 to 300°C and a temperature rise rate of 10°C/min.

4. The thermoplastic resin composition according to claim 2, wherein the total heat quantity of the polyamide is -20 J/g or less when measured by differential scanning calorimetry at a measuring temperature from 25 to 300°C and a temperature rise rate of 10°C/min.

5. The thermoplastic resin composition according to claim 2, wherein the concentration of terminal amino group of the polyamide is 40 $\mu$equiv/g or less.

6. The thermoplastic resin composition according to claim 2, wherein the polyamide is produced by:

melt-polymerizing a diamine component and a dicarboxylic acid component to obtain a melt polymerization polyamide, 70 mol % or more of the diamine component being m-xylylenediamine and 70 mol % or more of the dicarboxylic acid component being a $C_4$-$C_{20}$ straight-chain $\alpha,\omega$-aliphatic dicarboxylic acid and isophthalic acid in a molar ratio of 30:70 to 100:0;
crystallizing the melt polymerization polyamide by raising the temperature from 70°C to 120°C over 0.5 to 4 h in the presence of water in an amount of 0.1 to 30% by weight of the melt polymerization polyamide, thereby obtaining a crystallized polyamide; and
heat-treating the crystallized polyamide at a temperature from M - 50°C to M - 10°C, wherein M is the melting point of the melt polymerization polyamide, for 1 to 12 h in an inert gas atmosphere or under reduced pressure.

7. The thermoplastic resin composition according to claim 2, wherein the molar ratio of the $C_4$-$C_{20}$ straight-chain, $\alpha,\omega$-aliphatic dicarboxylic acid unit and the isophthalic acid unit is from 30:70 to 95:5.

8. The thermoplastic resin composition according to claim 2, wherein a melting point of the polyamide is from 160 to 240°C.

9. The thermoplastic resin composition according to claim 1, further comprising a smectite treated with an organic swelling agent, in an amount of from 0.3 to 20 parts by weight based on 100 parts by weight of the barrier resin B.

10. The thermoplastic resin composition according to claim 1, wherein the melt flow rate of the modified polyolefin Ca and the styrene copolymer Cb is 3 g/10 min or less when measured at 190°C under 2.16 kg load.

11. The thermoplastic resin composition according to Claim 1, further comprising a polycarbodiimide resin in an amount of 0.1 to 10% by weight of the barrier resin B.

12. A thermoplastic resin article comprising a layer which is made of the thermoplastic resin composition as defined in claim 1.

13. The thermoplastic resin article according to claim 12, wherein the barrier resin B is dispersed in the form of layers throughout the layer made of the thermoplastic resin composition.

14. A multi-layered article comprising at least one layer which is made of the thermoplastic resin composition as defined in claim 1, and at least one reinforcing layer.

15. The multi-layered article according to claim 14, wherein the barrier resin B is dispersed in the form of layers throughout the layer made of the thermoplastic resin composition.

16. A method of producing a thermoplastic resin article, which comprises a step of molding or forming the thermoplastic resin composition as defined in claim 1 into a layered form.

17. The method according to claim 16, wherein the step of molding or forming is performed by extrusion, blow forming, or injection molding.

**Patentansprüche**

1. Thermoplastische Harzzusammensetzung umfassend 50 bis 97 Gew.-% eines Polyolefins A, 2 bis 45 Gew.-% eines Barriereharzes B und 1 bis 45 Gew,-% eines modifizierten Polyolefins Ca und/oder eines Styrol-Copolymeren Cb, wobei das Verhältnis der Schmelzviskositäten des Polyolefins A und des Barriereharzes B die folgende Formel erfüllen:

$$0.7 < MV_B / MV_A \leq 2.5$$

wobei $MV_A$ die Schmelzviskosität (Pa·s) des Polyolefins A ist und $MV_B$ die Schmelzviskosität (Pa·s) des Barriereharzes B ist, jeweils gemessen unter einer Scherrate von 100 s$^{-1}$ bei einer Temperatur von MP + 2 °C bis MP + 10°C, wobei MP der Schmelzpunkt des Barriereharzes B ist.

2. Thermoplastische Harzzusammensetzung nach Anspruch 1, wobei das Barriereharz B ein Polyamid ist, welches aufgebaut ist aus einer Diamingerüsteinheit und einer Dicarbonsäuregerüsteinheit, wobei 70 Mol-% oder mehr der Diamingerüsteinheit m-Xylylendiamineinheiten sind und 70 Mol-% oder mehr der Dicarbonsäuregerüsteinheit eine geradkettige aliphatische C$_4$-C$_{20}$ $\alpha,\omega$-Dicarbonsäureeinheit und eine Isophthalsäureeinheit in einem molaren Verhältnis von 30:70 bis 100:0 sind.

3. Thermoplastische Harzzusammensetzung nach Anspruch 2, wobei die Kristallinität des Polyamids 25 % oder mehr ist, gemessen durch Differential-Scanning-Kalorimetrie bei einer Messtemperatur von 25 bis 300°C und eine Temperaturerhöhungsgeschwindigkeit von 10°C/min.

4. Thermoplastische Harzzusammensetzung nach Anspruch 2, wobei die Gesamtwärmemenge des Polyamids -20 J/g oder weniger ist, gemessen durch Differential-Scanning-Kalorimetrie bei einer Messtemperatur von 25 bis 300°C und einer Temperaturerhöhungsgeschwindigkeit von 10°C/min.

5. Thermoplastische Harzzusammensetzung nach Anspruch 2, wobei die Konzentration der terminalen Aminogruppe des Polyamids 40 µÄquiv/g oder weniger ist.

6. Thermoplastische Harzzusammensetzung nach Anspruch 2, wobei das Polyamid hergestellt wird durch:

   Schmelz-Polymierisieren einer Diamin-Komponente und einer Dicarbonsäure-Komponente zur Herstellung eines Schmelzpolymerisationspolyamids, wobei 70 Mol-% oder mehr der Diaminkomponente m-Xylylendiamin sind und 70 Mol-% oder mehr der Dicarbonsäure-Komponente eine geradkettige aliphatische C$_4$-C$_{20}$ $\alpha,\omega$-Dicarbonsäure und Isophthalsäure in einem molaren Verhältnis von 30:70 bis 100:0 sind;
   Kristallisieren des Schmelzpolymerisations-Polyamids durch Erhöhen der Temperatur von 70°C auf 120°C während 0,5 bis 4 Stunden in Gegenwart von Wasser in einer Menge von 0,1 bis 30 Gew.-% des Schmelzpolymerisations-Polyamids, wodurch ein kristallisiertes Polyamid erhalten wird; und
   Wärmebehandeln des kristallisierten Polyamids bei einer Temperatur von M - 50°C bis M - 10°C, wobei M der Schmelzpunkt des Schmelz-Polymerisations-Polyamids ist, während 1 bis 12 Stunden in einer Inertgasatmosphäre oder unter vermindertem Druck.

7. Thermoplastische Harzzusammensetzung nach Anspruch 2, wobei das molare Verhältnis der geradkettigen aliphatischen C$_4$-C$_{20}$ $\alpha,\omega$-Dicarbonsäureeinheit und der Isophthalsäureeinheit 30:70 bis 95:5 beträgt.

8. Thermoplastische Harzzusammensetzung nach Anspruch 2, wobei der Schmelzpunkt des Polyamids 160 bis 240°C beträgt.

9. Thermoplastische Harzzusammensetzung nach Anspruch 1, darüber hinaus umfassend einen Smektit, der mit einem organischen Quellungsmittel behandelt wurde, in einer Menge von 0,3 bis 20 Gewichtsteilen bezogen auf 100 Gewichtsteile des Barriereharzes B.

10. Thermoplastische Harzzusammensetzung nach Anspruch 1 , wobei die Schmelzflussrate des modifizierten Polyolefins Ca und des Styrol-Copolymeren Cb 3 g/10 min oder weniger ist, gemessen bei 190°C unter 2,16 kg Last.

**11.** Thermoplastische Harzzusammensetzung nach Anspruch 1, darüber hinaus umfassend ein Polycarbodiimidharz in einer Menge von 0,1 bis 10 Gew.-% des Barriereharzes B.

**12.** Thermoplastischer Harzartikel, umfassend eine Schicht, die aus der wie in Anspruch 1 definierten thermoplastischen Harzzusammensetzung hergestellt ist,

**13.** Thermoplastischer Harzartikel nach Anspruch 12, wobei das Barriereharz B in Form von Schichten durch die Schicht dispergiert ist, die aus der thermoplastischen Harzzusammensetzung hergestellt ist.

**14.** Mehrschichtartikel, umfassend mindestens eine Schicht, die aus der thermoplastischen Harzzusammensetzung wie in Anspruch 1 definiert, und mindestens eine verstärkende Schicht.

**15.** Mehrschichtartikel nach Anspruch 14, wobei das Barriereharz B in Form von Schichten durch die Schicht dispergiert ist, die aus der thermoplastischen Harzzusammensetzung hergestellt ist.

**16.** Verfahren zur Herstellung eines thermoplastischen Harzartikels, welches einen Schritt des Bildens oder Formens der wie in Anspruch 1 definierten thermoplastischen Harzzusammensetzung zu einer Schichtform umfasst.

**17.** Verfahren nach Anspruch 16, wobei der Schritt des Bildens Formens durch Extrusion, Blasformen oder Spritzformen durchgeführt wird.

## Revendications

**1.** Composition de résine thermoplastique comprenant 50 à 97% en poids d'une polyoléfine A, 2 à 45% en poids d'une résine de barrière B, et 1 à 45% en poids d'une polyoléfine modifiée Ca et/ou d'un copolymère de styrène Cb, dans laquelle le rapport entre les viscosités à chaud de la polyoléfine A et de la résine de barrière B satisfait à la formule suivante :

$$0,7 < MV_B/ MV_A \leq 2,5$$

dans laquelle $MV_A$ représente la viscosité à chaud (Pa.s) de la polyoléfine A et $MV_B$ représente la viscosité à chaud (Pa.s) de la résine de barrière B, chacune étant mesurée sous une vitesse de cisaillement de 100 s$^{-1}$ à une température de MP + 2°C à MP + 10°C où MP représente le point de fusion de la résine de barrière B.

**2.** Composition de résine thermoplastique selon la revendication 1, dans laquelle la résine de barrière B est un polyamide qui est constitué d'un motif constitutif diamine et d'un motif constitutif acide dicarboxylique, 70 % en moles ou plus du motif constitutif diamine étant un motif m-xylylènediamine, et 70 % en moles ou plus du motif constitutif acide dicarboxylique étant un motif acide $\alpha,\omega$-dicarboxylique aliphatique à chaîne linéaire en $C_4$-$C_{20}$ et un motif acide isophtalique dans un rapport molaire de 30:70 à 100:0.

**3.** Composition de résine thermoplastique selon la revendication 2, dans laquelle la cristallinité du polyamide est de 25% ou plus lorsqu'elle est mesurée par calorimétrie à balayage différentiel à une température de mesure de 25 à 300°C et à une vitesse de montée en température de 10°C/min.

**4.** Composition de résine thermoplastique selon la revendication 2, dans laquelle la quantité de chaleur totale du polyamide est de -20 J/g ou moins lorsqu'elle est mesurée par calorimétrie à balayage différentiel à une température de mesure de 25 à 300°C et à une vitesse de montée en température de 10°C/min.

**5.** Composition de résine thermoplastique selon la revendication 2, dans laquelle la concentration de groupe amino terminal du polyamide est de 40 péquiv/g ou moins.

**6.** Composition de résine thermoplastique selon la revendication 2, dans laquelle le polyamide est produit par :

✦ polymérisation en fusion d'un constituant diamine et d'un constituant acide dicarboxylique pour obtenir un polyamide de polymérisation en fusion, 70 % en moles ou plus du constituant diamine étant de la m-xylylènediamine et 70 % en moles ou plus du constituant acide dicarboxylique étant un acide $\alpha,\omega$-dicarboxylique aliphatique à chaîne linéaire en $C_4$-$C_{20}$ et de l'acide isophtalique dans un rapport molaire de 30:70 à 100:0 ;

✦ cristallisation du polyamide de polymérisation en fusion par élévation de la température de 70°C à 120°C en l'espace de 0,5 à 4 h en présence d'eau en quantité de 0,1 à 30% en poids du polyamide de polymérisation en fusion, ce qui permet d'obtenir un polyamide cristallisé ; et

✦ traitement thermique du polyamide cristallisé à une température de M - 50°C à M - 10°C, où M est le point de fusion du polyamide de polymérisation en fusion, pendant 1 à 12 h dans une atmosphère de gaz inerte ou sous pression réduite.

7. Composition de résine thermoplastique selon la revendication 2, dans laquelle le rapport molaire du motif acide $\alpha,\omega$-dicarboxylique aliphatique à chaîne linéaire en $C_4$-$C_{20}$ et du motif acide isophtalique est de 30:70 à 95:5.

8. Composition de résine thermoplastique selon la revendication 2, dans laquelle un point de fusion du polyamide est de 160 à 240°C.

9. Composition de résine thermoplastique selon la revendication 1, comprenant en outre une smectite traitée avec un agent gonflant organique, en quantité de 0,3 à 20 parties en poids pour 100 parties en poids de la résine de barrière B.

10. Composition de résine thermoplastique selon la revendication 1, dans laquelle l'indice de fluidité à chaud de la polyoléfine modifiée Ca et du copolymère de styrène Cb est 3 g/10 min ou moins lorsqu'il est mesuré à 190°C sous une charge de 2,16 kg.

11. Composition de résine thermoplastique selon la revendication 1, comprenant en outre une résine de polycarbodiimide en quantité de 0,1 à 10% en poids de la résine de barrière B.

12. Article en résine thermoplastique comprenant une couche qui est faite de la composition de résine thermoplastique telle que définie dans la revendication 1.

13. Article en résine thermoplastique selon la revendication 12, dans lequel la résine de barrière B est dispersée sous forme de couches dans toute la couche faite de la composition de résine thermoplastique.

14. Article multicouche comprenant au moins une couche qui est faite de la composition de résine thermoplastique telle que définie dans la revendication 1, et au moins une couche de renfort.

15. Article multicouche selon la revendication 14, dans lequel la résine de barrière B est dispersée sous forme de couches dans toute la couche faite de la composition de résine thermoplastique.

16. Procédé de production d'un article en résine thermoplastique, qui comprend une étape de moulage ou de formage en couche de la composition de résine thermoplastique telle que définie dans la revendication 1.

17. Procédé selon la revendication 16, dans lequel l'étape de moulage ou de formage est effectuée par extrusion, formage par soufflage ou moulage par injection.

## Fig. 1

**EP 1 752 492 B1**

## REFERENCES CITED IN THE DESCRIPTION

### Patent documents cited in the description

- JP 55121017 A
- JP 5156036 A
- JP 10279752 A